# EUROPEAN PATENT APPLICATION

(11) **EP 2 106 140 A2**
(43) Date of publication of application: **30.09.2009**
(21) Application number: 09155846.0
(22) Date of filing: 23.03.2009
(51) Int. Cl.: H04N 7/173, H04N 5/445

(54) **Information display apparatus and information display method**

(30) Priority: 26.03.2008 JP 2008081013
(71) Applicant: Kabushiki Kaisha Toshiba, Minato-ku, Tokyo 105-8001 (JP)
(72) Inventor: Wakayama Shirou, Minato-ku, Tokyo 105-8001 (JP); Ozaki Satoshi, Minato-ku, Tokyo 105-8001 (JP); Terashima Yoshiki, Minato-ku, Tokyo 105-8001 (JP); Odaka Kenji, Minato-ku, Tokyo 105-8001 (JP)
(74) Representative: HOFFMANN EITLE

(57) **Abstract**

An information display apparatus includes an information acquisition unit (12) configured to acquire a plurality of information items through a network in accordance with an acquisition script in a scenario, the scenario including the acquisition script, a conversion scrip and a motion addition script, an information conversion unit (13) configured to extract one or more parts to be displayed from each information item acquired by the information acquisition unit (12), in accordance with the conversion script included in the scenario, a motion addition unit (14) configured to process all or some of the parts extracted by the information conversion unit (13), to be displayed with changing in content automatically and/or with an audio output, respectively, in accordance with the motion addition script included in the scenario.

## Description

The present invention relates to an information display apparatus and information display method for acquiring data on a network and displaying the information acquired.

TV receivers may be used in various ways. For example, a user may keep a TV receiver on for only some time he or she is looking and listening carefully at a specific TV program, or for only some time he or she is watching the program while doing something else. Alternatively, the user may keep the TV receiver on at all times, and repeat arbitrarily only listening to sound broadcast, glancing at the screen while listening to the sound, or looking carefully at the screen while listening to the sound. Otherwise, the user may keep the TV receiver on at all times, not attentively watching the program, but using the program as an ornamental image and a background music piece. TV receivers are kept on, in various places such as houses, stores and public facility.

In TV broadcasting service, there is a limitation that TV receivers can play back only the information to be transmitted by the TV stations. They can indeed receive and play back TV-broadcast information, but only a few programs that the existing broadcasting stations are broadcasting.

Now we can receive many information items other than the information items the TV stations broadcast. The existing networks, particularly the Internet, now enable us to obtain a variety of information, drastically changing the distribution of information. At present, an environment is being built, in which people in general (i.e., non-professional users) all over the world can not only receive information, but also transmit information. On the Internet, information items of various descriptions, from the political and economic reports to pleasure guides such as "Good Restaurants I Dined Last Week." In addition, the Internet now enables users to receive various information items, compile them, express opinions on them, and other users to give comments on the opinions. An information distribution system in which ordinary people play leading roles can be said to be being built on a large data network called "Internet."

Far more information is distributed on the Internet than from TV stations. Through the Internet, however, people cannot acquire information in such a passive way as obtaining information through TV receivers. To acquire information through the Internet, the user must be more active, sitting at desk, operating the keyboard to input retrieval key words, and then clicking the mouse. (In order to enjoy watching a TV program, he or she only needs to turn on the TV switch and the channel button at most, while lying on the sofa.) This difference may be best expressed by the everyday phrase of "We see TV and gets information through the Internet."

To acquire desired information through the Internet and browse the information, the user should perform an action, first determining what kind of information he or she really wants, then inputting keywords related to the information he or she wants, thereby retrieving some information items, and finally selecting the very item he or she wants.

JP-A 2004-343683(KOKAI) and JP-A 2007-074158 (KOKAI) disclose apparatuses that handle multimedia data. These apparatuses display video data and text data and generate audio data, but only in their original form.

In order change the information displayed on the Internet browser screen, the user must perform an action. (If the user only activates the browser screen, the screen will keep displaying the same information at most.) Without the user's action, nothing will change on the browser screen.

The invention has been made in view of the foregoing. An object of the invention is to provide an information display apparatus and information display method that can change the information acquired through the Internet and displayed on a screen, not requiring any active operation on the part of the user.

According to one aspect of this invention, there is provided an information display apparatus which includes an information acquisition unit configured to acquire a plurality of information items through a network in accordance with a acquisition script in a scenario, the scenario including the acquisition script, a conversion script and a motion addition script, an information conversion unit configured to extract one or more parts to be displayed from each information item acquired by the information acquisition unit, in accordance with the conversion script included in the scenario, and a motion addition processing unit configured to process all or some of the parts extracted by the information conversion unit, to be displayed with changing in content automatically and/or with an audio output, respectively, in accordance with the motion addition script included in the scenario.

The invention can be more fully understood from the following detailed description when taken in conjunction with the accompanying drawings, in which:
FIG. 1 is a diagram showing an exemplary configuration of a network system according to an embodiment;
FIG. 2 is a block diagram showing the configuration of an information display apparatus according to the embodiment;
FIG. 3 is a flowchart explaining an exemplary operation sequence of the information display apparatus;
FIG. 4 is a diagram illustrating the data structure of the information in the information display apparatus;
FIG. 5 is a diagram showing an exemplary conversion script;
FIG. 6 is a diagram showing an exemplary motion addition script;
FIG. 7 is a diagram illustrating an exemplary motion added by the motion addition unit of the information display apparatus;
FIG. 8 is a diagram explaining how a plurality of corners are automatically displayed on the screen, one after another;
FIG. 9 is a diagram explaining how the corners are automatically branched in accordance with the content of the information acquired; and
FIG. 10 is a block diagram showing the configuration of the information display apparatus having a storage unit as an additional component.

An embodiment of this invention will be described with reference to the accompanying drawings.

The embodiment is an information display apparatus that enables the user to see and hear various information items through the Internet, requiring no active operation on the part of the user. (The user can acquire the information items available on the Internet, by turning on the TV switch and selecting a channel at most.)

The user may use the information acquired through the Internet, in various states. Let us assume the following two states. First, the user may "watch the screen displaying the information, not so attentively but continuously for a relatively long time." Second, the user may "watch the screen, not with an excessive attention, only when interested in the information, or may keep looking at the screen carelessly." Hereinafter, these two states shall be generally referred to as "careless viewing." It should be noted, however, the two states do not strictly define the careless viewing; there can be other states of careless viewing. This embodiment aims to provide an environment in which the user can "carelessly view" various information items distributed on the Internet (i.e., an environment similar to one the user can have by keeping his or her TV receiver on).

To provide this environment, at least two of the following elements may be introduced into the system:

### (1) To move the information acquired through the Internet, on the screen.

If anything displayed on the screen moves or changes (or if sound is generated or is changed), it will probably call attention of the user who is not attentively watching the screen, making him or her take a look at the screen. If nothing displayed on the screen moves or changes, the user will get bored and will probably keep his or her eyes off the screen. To enable the user to perform the "careless watching," it is desired that the information (video or audio, or both) should move or change to some extent.

### (2) To change the content of the information acquired through the Internet, on the screen.

If the same information, if interesting to the user, is repeatedly played back and displayed, it will becomes less interesting to the user. At last, the user does not care to glance at it. To make the user perform a "careless viewing," the information displayed should better be changed to another. (Information items, which are available on the Internet in large number, well serve this purpose of causing the user to do "careless viewing."

To make the user to "watch the screen, not with an excessive attention," one of the following two elements or both elements may be introduced into the system:

### (3) To reduce the number of information items the user may watch

The amount of information a man can acquire at a glance is limited. The more the information items given, the more the attention he or she will need to pay to get it. (Consequently, the user is bored and stops watching the screen right away, no longer performing the "careless viewing.") In the conventional art, the Web pages may be automatically scrolled if the user wants. The automatic Web-page scrolling does not work well, however. This is because most Web pages are text data, each page having so many sentences that the user needs to pay an excessive attention to understand them. Hence, the information items to display on the screen should better be reduced in number, to make the user do "careless viewing."

### (4) To give the user no branch choices, or not to give the user too many branch choices

If branches the user can select are displayed on the screen, the user may feel he or she must select at least one of them, inevitably compelled to pay an attention. For example, most Web pages that the conventional browser displays are full of branches (choices) displayed in the form of links. This is why information items to display be preferably reduced in number so that the user may perform "careless viewing." Thus, it is preferable to reduce or eliminate branches, so as to make the user do "careless viewing."

This embodiment will be described in more detail.

In this embodiment, an information display apparatus converts information available on the Internet to video data and/or audio data in accordance with a channel scenario. The apparatus displays an image based on the video data, and generates sound from the audio data.

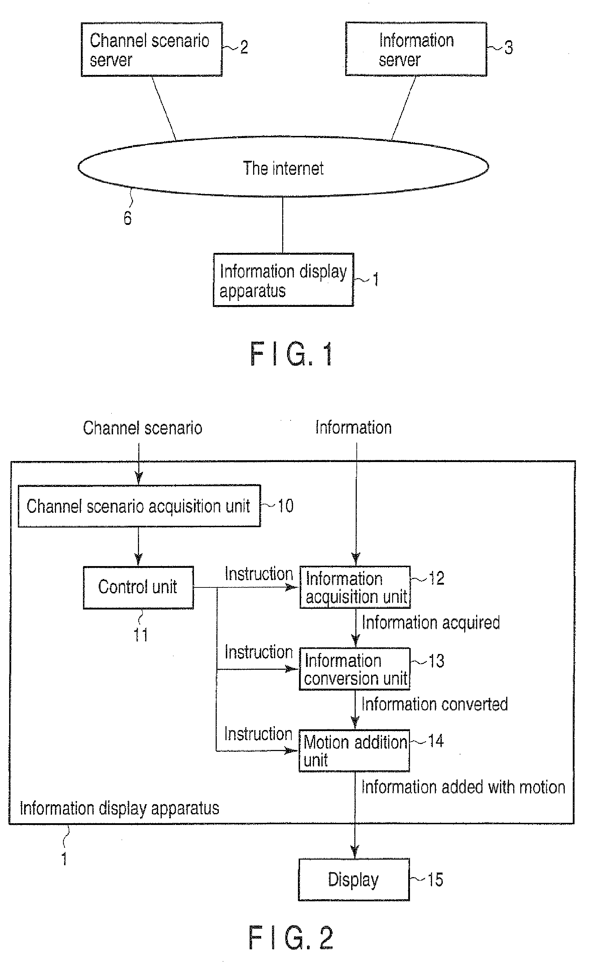

There will now be described an exemplary configuration of a network system according to this embodiment referring to FIG. 1.

As shown in FIG. 1, the network system comprises an information display apparatus 1, a channel scenario server 2, an information server 3, and the Internet 6. The channel scenario server 2 is an external server that distributes channel scenarios. The information server 3 is an external server that provides information.

One or more channel scenario servers may be provided on the Internet 6, in addition to the channel scenario server 2, and the information display apparatus 1 may be connected not only to the Internet 6, but also to a LAN (not shown). In this case, a channel scenario server is provided on the LAN, and the information display apparatus 1 can acquire a channel scenario not only from the channel scenario server 2, but also from the channel scenario server provided on the LAN.

Similarly, one or more information servers may be provided on the Internet 6, in addition to the information server 3, and the information display apparatus 1 may be connected not only to the Internet 6, but also to a LAN (not shown). In this case, an information server is provided on the LAN, and the information display apparatus 1 can acquire information not only from the information acquisition unit 12, but also from the information server provided on the LAN.

The information display apparatus 1 may be connected directly to the Internet 6. When the information display apparatus 1 is connected not only to the Internet 6, but also to a LAN (not shown), the information display apparatus 1 may be connected to the Internet 6, directly and/or through the LAN.

Further, the Internet 6 may be replaced by a network of a different protocol.

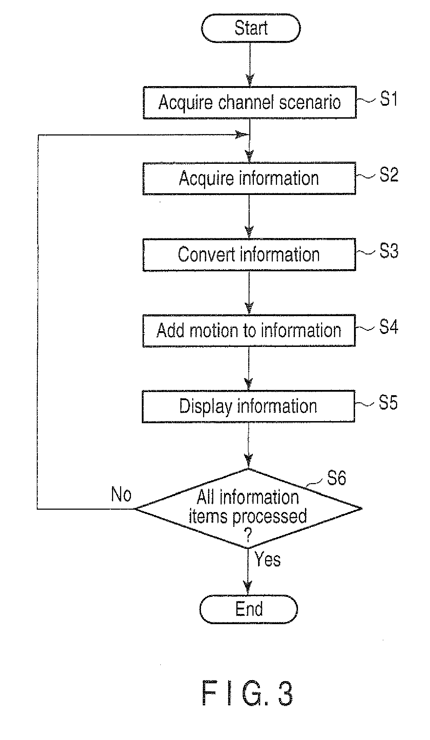

There will now be described a schematic representation of the information display apparatus and an exemplary operation sequence of the information display apparatus referring to FIG. 2 and FIG. 3.

As shown in FIG. 2, the information display apparatus 1 comprises a channel scenario acquisition unit 10, a control unit 11, an information acquisition unit 12, an information conversion unit 13, and a motion addition unit 14.

As shown in FIG. 2, a display 15, such as a liquid-crystal display or a TV monitor, is provided outside the information display apparatus 1. Instead, the display 15 may be incorporated in the information display apparatus 1. If the display 15 is provided outside the information display apparatus 1, it is connected to the information display apparatus 1, by a dedicated cable or by a network such as a wired LAN or a wireless LAN.

The information display apparatus 1 may embodied as an independent apparatus or as a component of an apparatus. Alternatively, the information display apparatus 1 may be embodied as software that operates in an apparatus such as a personal computer (PC).

The channel scenario acquisition unit 10 acquires a channel scenario from the channel scenario server 2 (Step S1). The channel scenario that the unit 10 should acquire may be predetermined, may be designated by the user, or may be automatically selected in accordance with a particular rule (in, for example, the channel scenario acquisition unit 10 or the control unit 11).

The channel scenario acquired describes instructions to the information acquisition unit 12, information conversion unit 13 and motion addition unit 14. In accordance with the channel scenario acquired, the control unit 11 gives the instructions to the information acquisition unit 12, information conversion unit 13 and motion addition unit 14.

In accordance with the instruction coming from the control unit 11, the information acquisition unit 12 acquires information from the information server 3 (Step S2). The information acquired is transferred from the information acquisition unit 12 to the information conversion unit 13.

The information conversion unit 13 converts the information to information of a prescribed format (Step S3). The prescribed format is some suitable format for display processing in the motion addition unit 14. Having the prescribed format, the information can be well displayed at the motion addition unit 14. As to the element (3) pointed out above, data extraction is performed to reduce the "number of information items." Nonetheless, it is not absolutely necessary to reduce the number of information items.

As will be described later in detail, that part of the information acquired, which has been converted and signified, is extracted. The information acquired may be, for example, HTML information. In this case, for example, it can be determined that the title element of the information is the page tile, with very high probability. And, for example, it can be determined that part of the information which lies before the first p element of body element is the content, with very high probability. Some significations of the information is extracted, by determination like those based on the information. Whether this determination is correct depends on the source from which the information has been acquired. Therefore, it cannot be decided beforehand which process should be performed on the information acquired.

The information acquired is transferred from the information conversion unit 13 to the motion addition unit 14.

The motion addition unit 14 adds motion to the information converted, in accordance with the content the control unit 11 has specified (in order to attract the user's attention appropriately, not obliging the user to pay attention) (Step S4). For instance, motion is added to the information, the information moves on the screen moves. Thus, the information, which is the text data available on the Internet in most cases (and which is not supposed to move), can be continuously changed, though the user does nothing at all.

As will be described later in detail, for example, the information signified is converted to an image and/or sound in accordance with "change information." The change information is data that specifies a visual effect such as slide-in, fade-out, character-color change, or the like. If the information signified represents the title, for instance, big font characters may be slided in from the upper side of the screen. And, if the information signified represents the content, red characters may be faded in at the center of the screen. As the change information is applied to the information extracted, the information can continuously change, or achieve an animation effect.

At this point, the structure of the information remains unchanged even if its content changes, so long as it is coming from the same new site. Hence, the same change information can be applied to any other content extracted. In other words, the same change information can animate consecutive Web pages, which constitute a content that keeps moving for some time.

Motion may be added to the information to change the content displayed (for example, to move text data). Instead of this or in addition to this, a sound effect may be imparted to the information (for example, the text data may be output in the form of a synthesized voice that is generated from text data).

The process of adding motion pertains to the above-noted element (1), i.e., "moving the information acquired through the Internet." Nevertheless, it is not absolutely necessary, on all information, to perform the process of adding motion.

The information now added with motion is supplied from the motion addition unit 14 to the display 15. The display 15 displays the information (Step S5).

Steps S2 to S5 are repeated until all information items described in the channel scenario are processed. That is, the process sequence of FIG. 3 is terminated if all information items are found to have been processed (if YES in Step S6).

The process sequence of FIG. 3 is no more than an example. The process can be performed in various ways. For example, all information items designated in the channel scenario may be acquired at a time. Further, the information items may be displayed after they have been acquired, converted and given motion. Moreover, Steps S2 to S5 may be performed in a pipeline fashion.

The "channel scenario" will be explained.

As may be understood from the above, the information display apparatus 1 performs three major processes, i.e., information acquisition, information conversion/extraction, and motion addition. The three processes are all performed in accordance with the "channel scenario."

In each broadcasting station, it is scheduled what information should be broadcast at which timing to the existing TV receivers. The general audience cannot have any TV program being broadcast in accordance with their own schedule (though they can obtain an environment in which they can enjoy "careless viewing," merely by keeping their TV receivers on). On the Internet, enormous information prepared by a large number of persons is available at all times, new information is always uploaded, and part of the information is updated or deleted at all times. Therefore, which information item should be acquired and how it should be displayed is left basically to each user's discretion.

In this embodiment, the selection of information items to display and the section of the way of displaying any selected information item are described in the channel scenario, and the three major processes (i.e., information acquisition, information conversion/extraction, and motion addition) are performed in accordance with the channel scenario. More specifically, the channel scenario describes which information items (e.g., Web pages) should be acquired in which order, how the information items acquired should be converted and extracted, and how motion should be added to the information items converted and extracted. Thus, the embodiment can easily provide a flexible environment in which the user can "carelessly view" the information available on the Internet. Moreover, the period from start to end over which the information is displayed can be lengthened and shortened in accordance with the channel scenario, too.

The "channel scenarios" can be acquired through the Internet. That is, "channel scenarios" the general users have prepared are published on the Internet and available to any users, like any other information available on the Internet. Any user can therefore acquire and use any "channel scenario" thus available on the Internet. In other words, the user of the information display apparatus 1 may use the "channel scenario" he or she has prepared or any "channel scenario" he or she has acquired from the Internet. In either case, the "channel scenario" has been prepared by an ordinary user. In this respect, the information distribution via the Internet prominently differs from the information distribution from the TV stations. Furthermore, any user can modify a "channel scenario" prepared by someone else and acquired via the Internet, thus creating a new "channel scenario" for his or her use. Such an interactive user activity is impossible in the existing TV broadcasting, but can be efficiently accomplished in the Internet, which is an arena where general users are leading players.

This embodiment enables the user to acquire various types of information available on the Internet and to read the information thus acquired, which is impossible with the conventional technology such as television technology. The user can, for example, "carelessly view" the information available on the Internet.

The information display apparatus 1 of the configuration described above will be described in more detail.

In the information display apparatus 1, the channel scenario acquisition unit 10 acquires a channel scenario (i.e., instructions (scripts) specifying the operation that the apparatus 1 should perform) from the channel scenario server 2 provided on the Internet 6.

The channel scenario consists of a plurality of scripts, e.g., instructions to the information acquisition unit 12, information conversion unit 13 and motion addition unit 14, etc. The scripts may be compiled into one file or into several files. The scripts may be compressed in order to reduce the cost of transmitting them. The channel scenario may be encrypted. If the channel scenario is encrypted, any unauthorized person cannot know what content the user is reading. This enhances the protection of the user's privacy.

The channel scenario is available on the Internet. Instead, the channel scenario may be distributed to the user, as data recorded in a medium such as a CD-ROM, a DVD, a QR code or a USB memory. Alternatively, URL holding the channel scenario may be distributed.

One or more channel scenario servers may be provided on the network 6, in addition to the channel scenario server 2. In this case, a channel scenario list is acquired from a server provided on the network 6 and designated by the user or set before the apparatus 1 is shipped. From the list acquired, the channel scenario server 2 may be selected, whereby the channel scenario is acquired from the channel scenario server 2. Alternatively, a retrieval keyword may be transmitted to another server already designated or selected by the user, and the another server may select the suitable channel scenario server 2 based on the retrieval keyword, and returns the result of the selection.

The channel scenario that the channel scenario acquisition unit 10 has acquired from the channel scenario server 2 is supplied to the control unit 11. The control unit 11 divides the channel scenario into three scripts or may acquire three kinds of scripts individually. The three scripts are sent to the information acquisition unit 12, information conversion unit 13 and motion addition unit 14, respectively. Hereinafter, the script sent to the information acquisition unit 12 shall be referred to as "acquisition script," the script sent to the information conversion unit 13 as "conversion script," and the script sent to the motion addition unit 14 as "motion addition script."

In accordance with the "acquisition script," the control unit 11 notifies the information acquisition unit 12 of an external sever or an information position (or information site), either provided on the network 6, so that information may be acquire from the external server or the information position. The information position is identified by an URI or a unique identifier. Not a server, but P2P may be utilized to acquire the information available on a client side or the information from another information display apparatus. In any case, the information can be acquired as long as the information position is unique.

The "acquisition script" may include a plurality of information positions. In this case, text data can be acquired from an external server A, a background image data can be acquired from an external server B (other than the external server A). Thus, in this embodiment, various information items can be acquired from various places. The above-noted element (2), i.e., "changing the content of the information acquired through the Internet," can easily achieved.

The information that the information acquisition unit 12 has acquired is sent to the information conversion unit 13.

The information acquisition unit 12 may send metadata to the information conversion unit 13 and/or the motion addition unit 14. The meta data is information that shows what kind of data the acquired information is (e.g., data such as text data, image data or moving-picture data) or accompanying information (e.g., data such as codec or URI), or the like. The information conversion unit 13 or the motion addition unit 14 may use the metadata, too. Utilizing the metadata, the information conversion unit 13 and/or the motion addition unit 14 can serve to convert and display the acquired information in a way desirable manner.

The information conversion unit 13 converts the information sent from the information acquisition unit 12, in accordance with the "conversion script" supplied from the control unit 11.

In accordance with the "conversion script," the information conversion unit 13 can convert, for example, static information to information of a different type. The information conversion unit 13 can not only convert the information, but also set the information items in a particular order.

The information conversion unit 13 transfers the result of data conversion to the motion addition unit 14. The motion addition unit 14 adds motion to the information, on the basis of the result of data conversion, so that the display 15 may display moving information.

For example, the information conversion unit 13 finally generates Hashtables and a table sequence. Each Hashtable contains data items. The table sequence contains the Hashtables. The table sequence is transferred to the motion addition unit 14. For example, the motion addition unit 14 adds motion to each Hashtable used as one scene. The motion addition unit 14 supplies the Hashtables to the display 15, one after another in the order defined by the table sequence. The display 15 can therefore display the scenes one after another, in that order, not requiring any operation on the part of the user. Thus, an environment is provided, in which the user can "carelessly view" of the information.

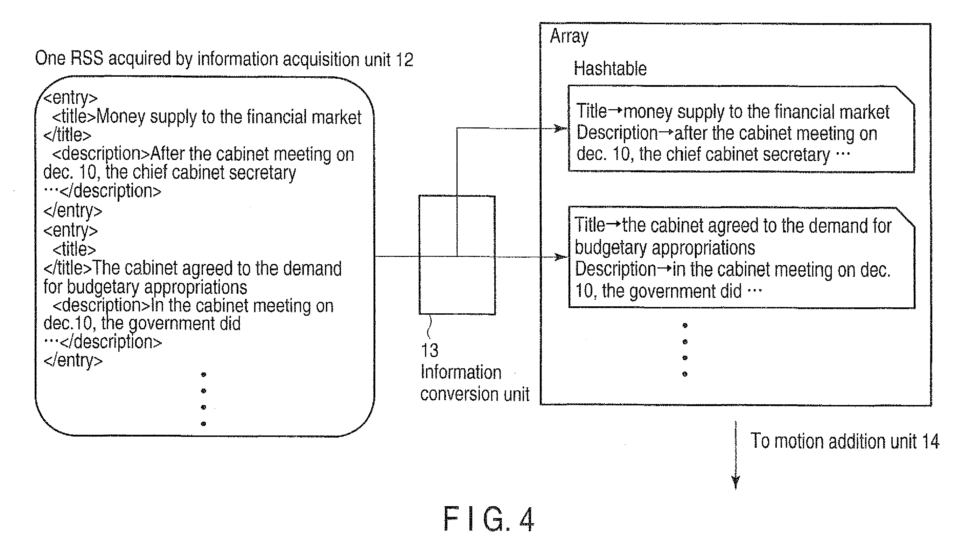

FIG. 4 illustrates an exemplary data structure of the information that the information conversion unit 13 transfers to the motion addition unit 14. The information shown in FIG. 4 has been extracted by the information conversion unit 13 from RSS acquired by the information acquisition unit 12 and has been transferred to the motion addition unit 14. As shown in FIG. 4, the information is a scene having the title of "Money supply to the financial market" and the description of "After the cabinet meeting on Dec. 10, the Chief Cabinet Secretary ...," or a scene having the title of "The Cabinet agreed to the demand for budgetary appropriations" and the description of "In the cabinet meeting on Dec. 10, the government did ...."

As described above, the information conversion unit 13 generates Hashtables. Instead, the information conversion unit 13 may generate any other data model in which the identifiers of the data items are associated with the data contents and held in the order the data contents are arranged.

The various data conversions the information conversion unit 13 performs will be explained. The data conversions exemplified below can be performed in any possible combinations.

### (i) To divide a static Web page into constituent elements for use in the motion addition unit 14

The constituent elements are, for example, a title, a description, a summary, a background, and an image. The constituent elements may be automatically recognized by means of morphological analysis, syntactical analysis and the like. Alternatively, they may be recognized by applying specific parameters such as regular expression that work only for a particular Web page. Pages prepared with a specific blog tool may have the same document format in many cases. In view of this, the constituent elements are useful. Identifiers should better be added to the constituent elements, because they enable the motion addition unit 14 to add motion to each constituent element more easily. The identifiers can be contained in the "conversion script."

### (ii) To divide information composed of defined constituent elements, such as RSS, ICalendar, Microformat and JSON, in accordance with the rules applied to these elements

In the case of RSS, for example, a plurality of "entries" are held, each defining some elements such as "title," "link," "description," etc. Hence, each entry can be handled as one scene, which is very convenient. In the case of information described in XML format, its constituent elements are externally defined (for example, by DTD) and may therefore be often referred to. This external definition may be read and used to extract the constituent elements automatically.

### (iii) To rearrange information items

The information items the information acquisition unit 12 has acquired are arranged in a different order. For example, the information items may be arranged anew in the order of date. For another example, the warning news of weather forecast information may be arranged anew, if any, may be displayed first.

### (iv) To compile information items

As mentioned above, the information conversion unit 13 finally transfers the table sequence to the motion addition unit 14. At this point, the plurality of information items, if any, acquired by the information acquisition unit 12 may be compiled into a series of information items in the order described in the "conversion script" or defined by any other rule. As described above, the information acquisition unit 12 may acquire information from multiple sources. Thus, compiled information items may contain information from multiple sources. The series of information thus generated is useful. For example, the information items converted, such as those rearranged, may be complete.

### (v) To extract information items

The amount of information any person can read at a time is limited. If many characters are displayed on the screen at a time, the user cannot help but concentrate his or her mind in order to read the information displayed. In the case where the text data transferred is large, its content should better be extracted to reduce the information to such an amount as the user can read at a time. Various methods of reducing the information are available, such as a method of generating a summary from the text data, a method of extracting the first part or any designated part of the text data, either composed of a designated number of characters, a method of extracting only key words from the text data, and the like. The information may be reduced by various amounts. For example, it may be reduced in proportion to the number of contents displayed on the screen, or to such an amount as the user can understand at a time. Once so reduced, the information may remain displayed with not changes or may be reconstructed into new text data easy for the user to read.

### (vi) To perform voice synthesis

Not only characters are displayed, but also music or voice may be generated. Then, the information may attract the user's attention. In particular, if the information display apparatus 1 reads the displayed content in synthesized voice, it can long sustain the user's attention to the information. The information display apparatus 1 may indeed has a function of synthesizing voice, but it may instead uses a different function or may use a service available on the network 6. In order to synthesize voice, various data items such as a voice model, phonemes, a speech speed and an intonation model may be set. These data items may be set by the user. Alternatively, they may be set by the information display apparatus 1 or a voice-synthesizing function in accordance with the information displayed or a random-number table or the time or user's interests or information acquired from sensors or information acquired from the Internet.

Instead of the above-described method of converting information, any other method may be employed. For example, superfluous information, such as tags, may be removed.

The "conversion script" describes a combination of various information conversions. It describes, for example, the steps of data conversion, such as the step of extracting constituent elements from a Web page A, the step of combining the constituent elements extracted from RSS B and the step of arranging the constituent elements in a new order along the time axis. The "conversion script" thus describes these data conversion steps in the order they are performed.

These conversions may be interchanged as needed. For example, that part of the above-described conversion, which the process of acquiring information from RSS B, is not performed, and a process of extracting constituent elements, such as time and place, from ICal is inserted in place of said part of the above-described conversion. As a result, the information conversion unit 13 can transfer a combination of different constituent elements to the motion addition unit 14. The reason is that any information item converted is held as "plugin" in the information conversion unit 13.

The conversion plugin used in the information conversion unit 13 may be held in the information display apparatus 1 beforehand, or may be acquired from a server as needed, in accordance with the user's instruction. Alternatively, the conversion plugin may be described in the channel scenario.

The main task of the information conversion unit 13 is to convert the information it has received. Nonetheless, the unit 13 can acquire user-set information, time information, etc. These information items exist in the information display apparatus 1, and are distinguished from the information items the information acquisition unit 12 acquires from the servers provided on the network 6. The information items existing in the apparatus 1 may be handled as if the information acquisition unit 12 had acquired them from outside the apparatus 1. Then, any information items can be handled in the same way, no matter whether they originally exist within or without the information display apparatus 1.

The conversion plugin used in the information conversion unit 13 may define beforehand the input data format and the output data format.

The information conversion unit 13 may inspect the input and the output or the input format and input format, for the set of conversion plugins described in the "conversion script," based on the input and output formats defined for each of the conversion plugins previously. This inspection may be performed when the information conversion unit 13 reads the "conversion script." The inspection, if so performed, prevents display of wrong information and errors to some extent.

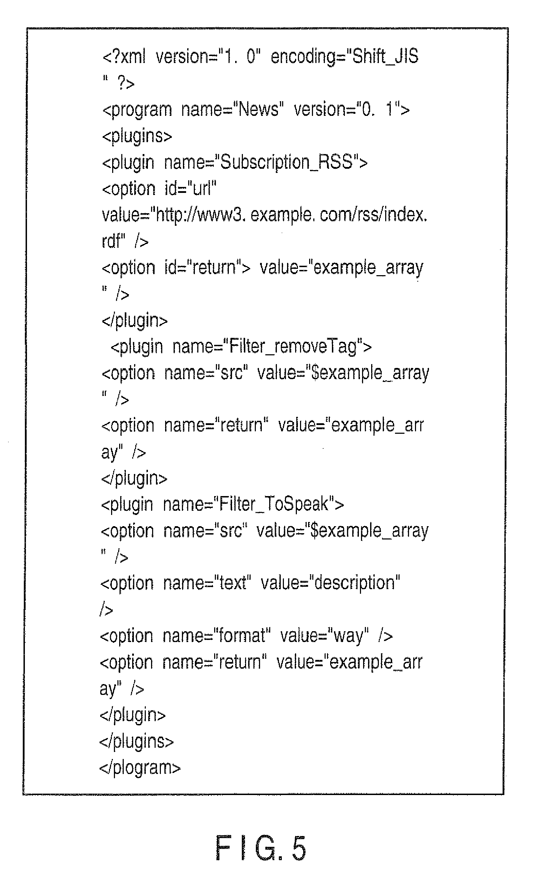

FIG. 5 shows an exemplary "conversion script." The example is described by using XML. The "conversion script" is not limited to this type, nevertheless. The "conversion script" can be of any other type.

The conversion script of FIG. 5 has various program elements. Of the program elements, the program name and the script version are declared as "news" and "0.1," respectively. Of the program elements, plugin element shows that the first conversion is "Subscription RSS," the second conversion is "Filter removeTag," and the third conversion is "Filter ToSpeak." The plugin element designates various settings, in accordance with its child element (i.e., option element), its id attribute, and its value attribute. In the first conversion, the first option element, id = "url," indicates that information should be acquired from url identified with the value attribute, thereby to read the structure as RSS from the information acquired. The next option element, id = "return," indicates that the structure (the elements of RSS) thus read should be stored in a sequence called "example_array" identified with the value attribute. After Subscription RSS has been converted, Filter removeTag is converted. This conversion is performed to remove superfluous elements, such as HTML tags. After the superfluous elements have been removed, Filter ToSpeak is converted. This conversion is performed to achieve voice synthesis on the information now free of tags. The information that has undergone these three conversions is sent from the information conversion unit 13 to the motion addition unit 14.

The motion addition unit 14 adds motion to the information sent from the information conversion unit 13, as is instructed by the "motion addition script." Added with the motion, the information can be so displayed that the user may enjoy "careless viewing."

The motion added to the information, rendering the same fit for "careless viewing," may be an animation effect such as "fade-in, fade-out," "scroll-in, scroll-out" or the like, or a visual effect such as "changing characters to ornamental ones," "changing character size," "moving characters," and "changing character-color graduation " or the like. The afore-mentioned element (1), i.e., moving the information acquired through the Internet, can be thus achieved. The information so displayed on the screen can attract the user's attention.

There are many types of motion, which may be added to the information.

The information display apparatus 1 may hold the data items representing these various motions. Alternatively, the "motion addition script" may describe a new motion, and the data representing the new motion may be acquired from a server provided on the network 6. In this case, the "motion addition script" designates the server from which to acquire the new-motion data. Alternatively, motion data may be acquired directly from the channel scenario server 2 or another retrieval engine by transmitting a retrieval query to the server 2 or retrieval engine. Note that the retrieval query is a key representing the motion name or motion type that accords with the grammar described in the "motion addition script." Still alternatively, the URI of any other server may be obtained, thereby to acquire the motion data from this server.

Timing information is required to move the information on the screen. Utilizing the timing information, text data can be displayed, character by character, or line by line, thereby inducing some expectation in the user. The timing information may be used to stop the process for some time, enabling the user to look at the displayed information less attentively, or to switch the background music to another. The timing information can be described in the "motion addition script."

The timing should better be set to achieve synchronization. The "motion addition script" may therefore describe the instruction for a waiting process and the instruction for a parallel process. Further, the "motion addition script" may describe a start time and an end time at which the designated motion should be started and terminated, respectively. Either time may be, for example, "upon lapse of x seconds after the preceding process has completed." In order to execute such an instruction accurately and precisely, the preceding process must be terminated within a period designated, or in real time. For this real-time procedure, the load that the process may impose on the apparatus may be calculated beforehand. In this case, the control unit 11 generates instructions in accordance with the load calculated, at appropriate timings. The information display apparatus 1 can then perform a smooth display operation.

The information conversion unit 13 performs voice synthesis on the text data, generating audio data representing voice. From the audio data, voice is played back. The voice thus played back is an element important in converting static information to information fit to "careless viewing." The voice need not present accurate intonation. Rather, it only needs to show an emotional tint. In addition to the voice synthesis performed by the information conversion unit 13, voice synthesis may be performed in the motion addition unit 14.

Moreover, information representing moving images may be acquired from an external server. In this case, the information display apparatus 1 can display moving images. If moving images are displayed in combination with text data and audio data, the apparatus 1 will provide a screen similar to a VT news screen.

In the information conversion unit 13, each Hashtable holds constituent elements and the identifiers thereof, by way of example. Therefore, the motion addition unit 14 can add motion to the information, using one Hashtable as data item representing one scene.

At this point, the motion addition unit 14 applies the content designated by, for example, the "motion addition script" to the entire sequence of Hashtables transferred from the information conversion unit 13. In this case, the information obtained from, for example, RSS describes a plurality of entries. The entries may be added with the same motion, for example, sliding in the title from the right side of the screen, fading in the description in the middle of the screen.

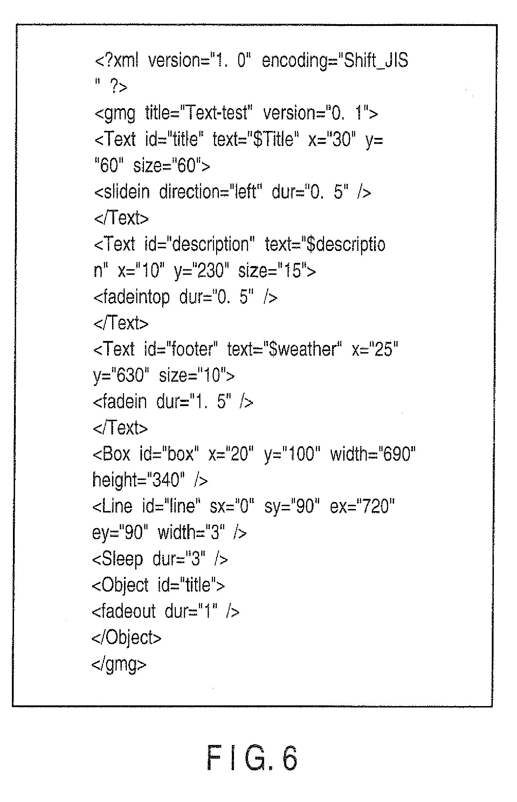

FIG. 6 shows an exemplary "motion addition script" that designates the motion addition described above. This motion addition script is described by using XML. The "motion addition script" is not limited to this type, nevertheless. The "motion addition script" can be of any other type.

The "motion addition script" of FIG. 6 has gmg elements. The name and script version of the "motion addition script" shown in FIG. 6 are "Text-test" and "0.1," respectively, as seen from the title attribute and the version attribute. The script has, as child elements, Text element, Box element and Line elements. Each of these child elements is distinguished from any other by id attribute and indicates the content to display on the screen. Text element of id attribute of "title" (id = "title"), for example, will be displayed at position (x, y) of (30, 60) and in the size of 60 points. The content of Text element is designated by text attribute. At this point, a symbol starting with $ is designated. In this case, the elements of a sequence transferred from the information conversion unit 13 can be designated. The child elements of Text and Box elements include a slidein element and a fadein element. These elements represent motions. Assume that the slidein element has a direction attribute of "left" and a dur element of "0.5." This means that a motion toward the coordinate designated by the x and y attributes of Text element, from the left side of the screen for 0.5 seconds. In the "motion addition script," these elements designate addition of motion. The "motion addition script" is read, one element after another, from top to bottom. The elements designate motions at the same time. To read Sleep element, which is the child element of gmg, however, the display pauses for the number designated by dur attribute. Object element designates "id," adding another motion.

As a result, this "motion addition script" adds the following motion to the information the information conversion unit 13 has converted. That is, three texts, a rectangle and a line are displayed on the screen. The texts are moved, fading in, fading out, or fading in top. When they fade in top, each displayed one line after another from top to bottom. Thereafter, the display pauses for three seconds by Sleep element. During this three-second period, the motion such as slide-in is completed. Then, only the text having id attribute of "title" fades out over one second.

Adding such motions to the information, the information display apparatus 1 can provide an environment in which the user can enjoy "careless viewing."

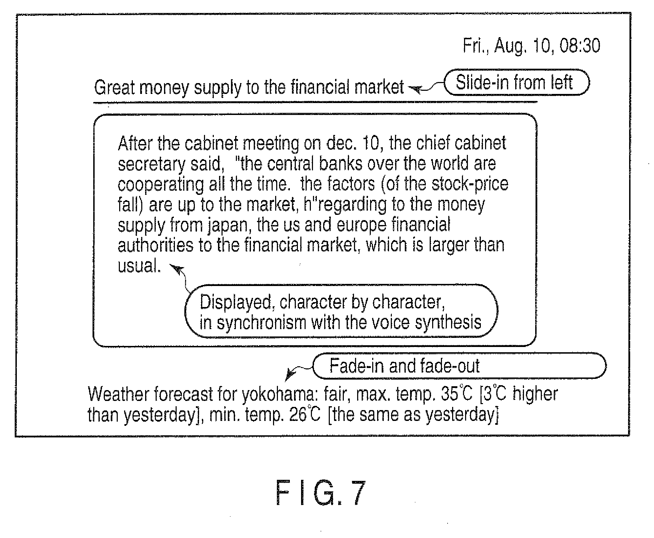

FIG. 7 illustrates an exemplary motion added by utilizing the "motion addition script."

Assume that the "motion addition script" describes three instructions. The first instruction designates to apply Adding such a motion as "sliding in at the top of the screen, from the left side thereof" to any character string with identifier "Title" transferred from the information conversion unit 13. The second instruction designates to apply Adding such a motion as "synthesized voice being played back and characters being displayed one by one" to any character string with identifier "description" transferred from the information conversion unit 13. The third instruction designates to apply Adding such a motion as "fade-in and fade-out being performed" to any character string with identifier "footer" transferred from the information conversion unit 13.

Assume that one of the Hashtables existing in the sequence transferred from the information conversion unit 13 includes identifiers "Title," "description" and "footer." Referring to this Hashtable, the motion addition unit 14 applies the "motion addition script" to the character string "Money supply to the financial market" identified with identifier "Title," thereby displaying this character string at the top of the screen. Similarly, the motion addition unit 14 applies the "motion addition script" to the character string "After the cabinet meeting on Dec. 10, the Chief Cabinet Secretary ...," thereby displaying the same in the center of the screen, and also to the character string "The weather in Yokohama will be ...," thereby displaying the same at the bottom of the screen.

Identifiers "title" and "description" have been acquired from an external server that distributes news, and identifier "footer" has been acquired from an external server that distributes weather forecasts. This means that the information acquisition unit 12 can acquire information from a plurality of external servers.

After displaying this scene, the motion addition and information display are performed on the next Hashtable included in the sequence transferred from the information conversion unit 13. This step is automatically repeated, each time for one Hashtable, requiring no action on the part of the user. This point pertains to the aforementioned element (4), i.e., giving the user no branch choices, or not giving the user too many branch choices. That is, the user cannot select information to display or has but a little chance of selecting information to display.

The "conversion script" may be used to designate a display manner for the transition period between one scene and the next scene. For example, a scene is made to fades out entirely in the screen, and the next scene is made to appear in the screen. If a plurality of channel scenarios are available, the "conversion script" may designate a display manner for the transition period between one scenario and the next scenario.

The information display apparatus 1 according to this embodiment may be one of the following alternatives:
(a) Apparatus for use in an apparatus or system (e.g., TV receiver, PC, or the like) having a display, configured to perform a function of the apparatus or system.
(b) Apparatus to be connected to an apparatus or system having a display, configured to work as an independent apparatus (e.g., hard disk recorder)
(c) Apparatus for use in an apparatus (e.g., hard disk recorder), connected to an apparatus or system having a display, configured to perform a function of the apparatus (e.g., hard disk recorder)
(d) Apparatus whose components are incorporated in other apparatuses, respectively. (For example, the information conversion unit 13 and motion addition unit 14 are incorporated in an apparatus or system having a display, the information acquisition unit 12 is incorporated in another apparatus to which the apparatus is connected. Thus, the other apparatus acquires information, which is supplied to the apparatus or system. The apparatus or system converts the information, adds motion to the information and displays the information.)

Particularly, if the information display apparatus 1 is incorporated into a TV receiver and performs one function thereof, it can display the information broadcast on channels 7, 9, 11, 13 and 15 not used in the terrestrial analog or digital TV broadcasting in Japan. The information display apparatus 1 therefore enables the TV receiver to display programs broadcast on more channels. In this case, the apparatus 1 can provide an environment in which the user can "carelessly view" the information available on the network 6, in the same way he or she sees the TV programs. Thus, the information display apparatus 1 according to this embodiment is used more effectively.

How the information display apparatus 1 displays an exemplary TV program entitled "Kawasaki Now! Channel" will be explained.

This program is composed of the following elements:
1. Opening Title
2. Area News Headline
3. Pinpoint Weather Forecast
4. Area News
5. Information
6. Good Restaurants Just Around the Corner
7. End Credit

The "Opening Title" is a character chain that slides in, from the right side of the screen, and moves until it stops at the center thereof, accompanied with a short music piece. The content of the "opening title" may be described beforehand in the "conversion script." Alternatively, it may be acquired from the "acquisition script."

To display "Area News Headline" and "Area News," RSS is acquired, which the "acquisition script" has already designated. The elements of RSS are converted to a "title" sequence and a "description" sequence in accordance with the "conversion script." Further, animation effects, i.e., slide-in/out and fade-in/out, are imparted to "title" and "description," respectively, in accordance with the "motion addition script."

At this point, the content to display is updated in accordance with RSS even if the animation effects remain unchanged, because Area News Headline and Area News have been prepared based on RSS. Therefore, the information presented to the user changes with time, from one to another. This helps to lower the probability that the user gets bored.

The same holds true of "Pinpoint Weather Forecast," "Information," and "Good Restaurants Just Around the Corner."

"End Credit" is displayed as a character string with an animation effect, in the same way as "Opening Title." "End Credit" may be displayed, together with the time of updating "End Credit" next time and the outline of the updating. The updating time may be the time when the apparatus 1 will display information to the user and simultaneously acquire new information. The components are instructed to avoid unnecessary information transfer, whereby the apparatus 1 can present information to the user at appropriate timing. In addition, if the information has not been updated at all, the user may cause the apparatus 1 not to display the information, when he or she selects a channel scenario. In this case, the probability of displaying the same information again can be lowered. These time data items may be described, as acquisition intervals, in one of the three scripts included in the channel scenario, i.e., "acquisition script," "conversion script" and "motion addition script," or may be acquired from the information the "acquisition script" has acquired.

A relatively short music (e.g., jingle) or a visual effect (e.g., curtain) may be interposed between the elements, thereby sustaining the user's attention to the information.

A telescope structure that each channel scenario may have will be described below.

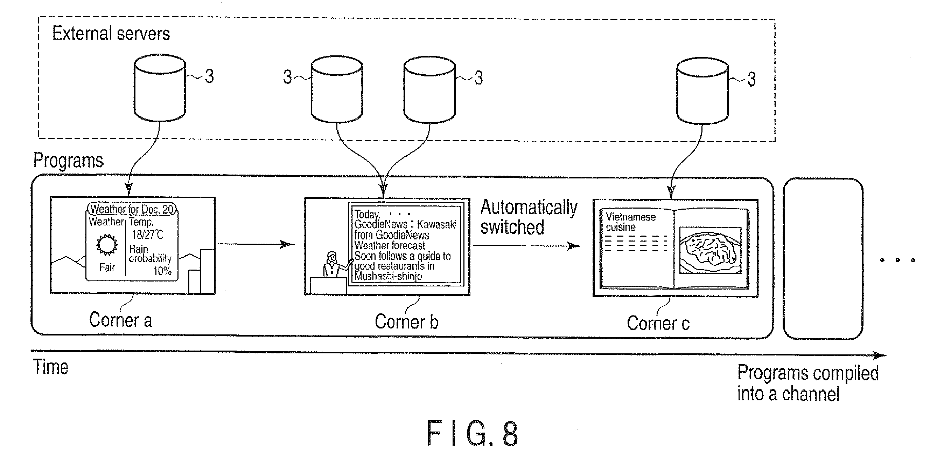

Thus far described is one basic channel scenario. Any channel scenario according to this embodiment may have a telescopic structure. That is, the channel scenario may be composed of a plurality of channel scenario sections, one sliding over another. The channel scenario is therefore extensible and or compressible and can therefore be longer. In this case, the control unit 11 plays back the channel scenario sections, one after another. In view of the exemplary TV broadcasting, "Pinpoint Weather Forecast" is equivalent to a corner, "Kawasaki Now!" is equivalent to the program proper, and a group of channel scenarios (programs) is equivalent to a channel. FIG. 8 explains how corners are automatically displayed on the screen, one after another. (FIG. 8 shows that "Corner a," "Corner b" and "Corner c" are displayed one after another, in the order they are mentioned.) Since channel scenarios are automatically displayed, one after another, the user can keep enjoying "careless viewing," without doing anything particular.

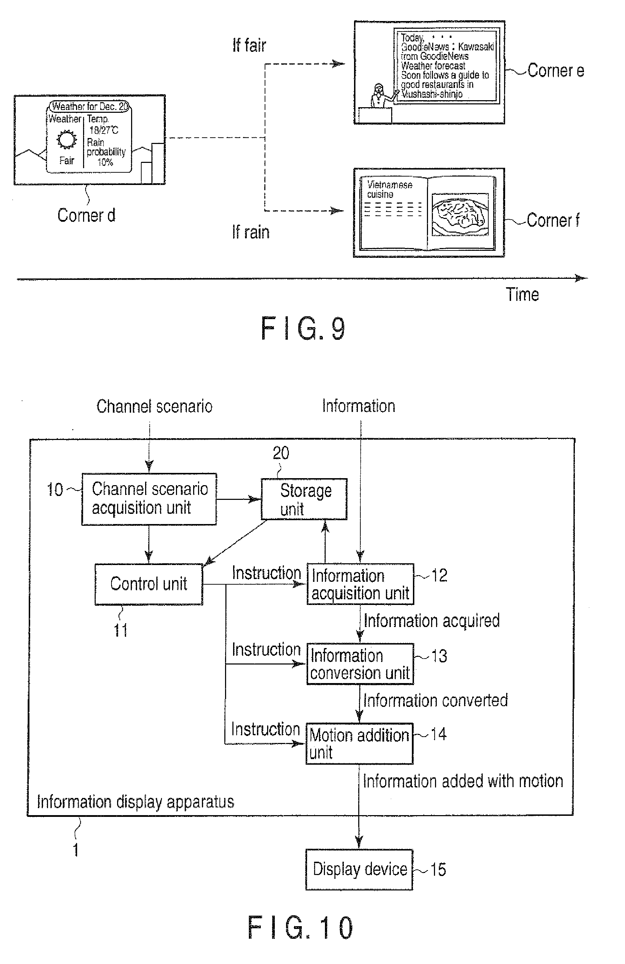

At this point, the control unit 11 can replace the channel scenarios that should be played back sequentially, with other channel scenarios, in accordance with the information acquired in a channel scenario. For example, if a weather forecast displayed, telling that it will rain tomorrow, information representing a topic relating to rain will be retrieved and played back. Relating to rain, the topic is interesting and exciting, satisfying the user who has been watching the weather forecast. FIG. 9 explains how the corners are automatically branched in accordance with whether the weather forecast tells it will be fine or will rain tomorrow. As shown in FIG. 9, Corner d" will automatically be switched to "Corner e" if it will fine tomorrow, or to "Corner f" if it will rain tomorrow.

For some users or for some channels, choices should better be made to achieve branching. A TV-broadcast quiz show may be a typical example. In such a channel, the user or the channel side may designate a branching mode beforehand, setting the information display apparatus 1 to the branching mode in which the user can make various choices. Once the apparatus 1 has been set to the branching mode, a specific probability of providing choices may be set, or whether choices should be provided or not may be determined in accordance with the choices the user has previously made. Thus, the channel can be flexible, giving exciting information to the user.

How to record programs will be explained with reference to FIG. 10. FIG. 10 shows the configuration of an information display apparatus 1 which differs from the apparatus 1 of FIG. 2, only in that a storage unit 20 is provided as an additional component. The storage unit 20 is provided to hold a channel scenario acquired and/or information acquired.

In most cases, the user is not incline to read again any information he or she has once read. If the information is important, however, the user may record the information so that he or she may read it once or twice again.

The conventional apparatuses for recording TV programs have a large-capacity storage unit, such as a HDD, in order to store the TV programs as video data. In the present embodiment, information is stored independently of the animation-effect data for the information. In addition, the animation-effect data is contained in text data, in the form of a script. Hence, as shown in FIG. 10, the control unit 11 causes the storage unit 20 to store the channel scenario acquired and the information acquired by the information acquisition unit 12. The apparatus 1 can therefore record the channel scenario and the information. Being text data items, the channel scenario and the information are easy to compress. If compressed and stored, they do not occupy only a relatively small part of the storage area the storage unit 20 has. To play back the information recorded, the control unit 11 needs only to generate an instruction, in accordance with the channel scenario recorded. More precisely, the control unit 11 instructs the information acquisition unit 12 to acquire the information stored in the storage unit 20, not to acquire new information. The information recorded may be stored outside the information display apparatus 1, for example in a remote server on the household network or on the Internet.

The information may not be stored, but the identifier unique to the channel scenario may be held in the storage unit 20. Then, the storage capacity of the storage unit 20 can be reduced even more. In this case, however, no external server holding the information may exist or the information may not be stored in an external server, if any, when the information must be played back. Hence, the reliable information acquisition and the storage capacity are in a trade-off relationship. Whether an external server should be used or the storage unit 20 should have a sufficient storage capacity is the user's or manufacturer's discretion. Nonetheless, it seems better to put more importance to the reliable information acquisition, because the storage unit 20 needs only a far smaller storage capacity to store the identifier unique to the channel scenario than to store the information that is video data.

How one channel is switched to another will be explained below.

The user may switch the channel on which he or she is viewing a program, to another, when the program comes or is coming to an end, or when the user feels the program is boring.

Assume that hundreds of channels are available. Then, the user has the following several methods of switching the channel on which the user is enjoying a program, to another.
(i) To select a channel broadcasting a program similar in content to the program the user is now viewing. This method is useful if the user remains interested in anything else similar
(ii) To select a channel broadcasting a program of the same genre as the program the user is now viewing, in order to switch, for example, a cannel broadcasting a baseball game to a channel broadcasting a football game. As in the method (ii), the channel may be selected in accordance with the meta data described in the channel scenario or in one of the three scripts included in the scenario (i.e., "acquisition script," "conversion script" or "motion addition script."
(iii) To select a channel broadcasting a program similar to the program the user is now viewing, in terms of the script included in the channel scenario. This method is based on the assumption that the programs a writer has written are similar in both content and quality. The information can be fast acquired if the "acquisition script" keeps designating the same information source, not keeping the user waiting for a long time and, thus, not interrupting the "careless viewing."
(iv) To select a channel broadcasting a program quite different from the program the user is now viewing. This method gives the user a new type of information, possibly surprising him or her. This method can be classified into two types. The first type refers to the data that is held in the apparatus 1 and meets the user's taste. The second type does not refer to this data at all. The first type gives the user contents he or she likes, but the user may get bored if given such contents one after another. If so, the second type is selected to displays contents of various types one after another, keeping the user interested for a long time and enabling the user to enjoy "careless viewing." The contents thus displayed may include some unpleasant to the user. In view of this, any content that the user does not want to see may be excluded from beforehand, so that only the contents not so different may be switched from one to another.

The user may selects and set any one of the methods (i) to (iv) exemplified above. Alternatively, the control unit 11 may select any one of the methods (i) to (iv) or may selects the one by one in a random order. In either case, the selected method may be changed to another, or the order in which to select the methods (i) to (iv) may be altered in accordance with the user's feedback.

The technique of so-called "pre-reading" will be explained.

To enable the user to enjoy "careless viewing," the information displayed must be smoothly switched, from one item to another item. Unlike TV programs, the information items acquired through the network 6 may be received with some delay, inevitably keeping the user waiting for the information he or she wants. This may render the information display apparatus 1 less user-friendly.

Thus, the control unit 11 may instruct the information acquisition unit 12 to acquire information well before the information is displayed. Otherwise, the control unit 11 may instruct not only the information acquisition unit 12 to do so, but also the information conversion unit 13 and motion addition unit 14 to convert the information and add motion, well before the information is displayed. In either case, the period the user is kept waiting can be shortened.

Here arises the question of what the "pre-reading" is. Since the information display apparatus 1 enables the user to "carelessly view" programs on many channels, any channel must be specified long before it is displayed. This is the pre-reading of the channel. In order to specify the channel long before the channel is displayed. The channel may be "pre-read" by using any one of the above-mentioned channel switching methods (i) to (iv). Since there is no telling when the channel switching method is changed to another, two or more channels may be pre-read.

One channel may include a plurality of sub-channels, and the sub-channel may be switched from one to another in accordance with the information acquired on the channel. That is, several candidates exist, one of which will be selected as a sub-channel to display next. In this case, pre-reading cannot be accomplished. One of the candidates may be selected and pre-read. If this method fails, the user will be kept waiting. It is therefore important to "pre-read" as many sub-channels as possible.

This method may be so modified to pre-read contents available on all channels the user may select and then store them as far as the storage unit 20 can. This may indeed shorten the user's waiting time as much as possible. If the contents are so pre-read and stored, however, they may be no longer new when displayed to the user. In view of this, it is desirable to confirm the channel updating immediately before displaying the contents or at regular intervals, by utilizing, for example, "HTTP 304 Not Modified response" coming from an external server.

The user may see any program many times on the same channel. If this is the case, the probability the apparatus 1 repeatedly refers to the same external server is high. In this case, the information display apparatus 1 may hold the connection state data (e.g., response time) about the external server. Then, the connection state data can be used to acquire information from the external server next time. Based on the connection state data, the whole time required for the information acquisition, the information conversion, the motion addition, and displaying the information to the user is estimated. The control unit 11 pre-reads the information by the estimated time and then instructs the information acquisition unit 12, information conversion unit 13 and motion addition unit 14, to pre-read the information efficiently. To shorten the time for the name solution in DNS, the name-solved information may be held as connection state data. To this end, much time should be spent to confirm that the address of this information does not change so often.

How information is acquired will be explained.

The information display apparatus 1 will be more useful if it enables the user to use information later, such as map information or URL data. The information includes not only the map, telephone numbers and URL data items, displayed on the screen, but also detailed information, high-definition images, advertisement and links, not displayed on the screen.

The control unit 11 transmits these items of information to, for example, a remote controller or a mobile telephone. The medium used here may be e-mail, Bluetooth™, wireless LAN, infrared rays, printers, or the like. The user's mobile telephone can function as a remote controller to control the information display apparatus 1, and can receive the information transmitted from the information display apparatus 1.

In this case, the information display apparatus 1 can transmit information to the mobile telephone in a method appropriate for the user, while keeping the information in secret. In this respect, the apparatus 1 is useful.

Moreover, the user information may be held in the mobile telephone used as a remote controller, not in the information display apparatus 1. In this case, the user's playback history, the user's favorite data items, and the recorded information are held in the mobile telephone, and the information display apparatus 1 operates, referring to the playback history, favorite data items and recorded information. A remote controller may be used multiple users, however, users may have their own mobile telephone, these information in the mobile telephone may indicate each user's interest exactly. Thus, the information display apparatus 1 may display appropriate information to the current user. The information display apparatus 1 holds the data representing the method in which the information conversion unit 13 converts the input information. Data items representing different methods of converting information, each for one user, need not be stored in the apparatus 1. This helps to reduce the operating capacity and storage capacity of the information display apparatus 1.

The devices to which the apparatus 1 may transmit information are not limited to mobile telephones. The apparatus 1 can transmit information to other personal-use devices, too, such as watches, remote controllers, pens, glasses and pocket diaries.

Interesting and exciting motions, which the motion addition unit 14 may add to information, will be explained.

The present embodiment imparts a visual effect, such as animation effect, to the information acquired through the Internet. This enables the user to enjoy "careless viewing" of the information, without being bored.

If only an animation effect is repeatedly imparted to information items, the user will be bored of viewing the information items displayed. To avoid this, different visual effects may be described in the script, and the apparatus 1 may select and apply these effects to information items. The information items with such effects are likely to attract user's attention.

It would be better to impart one effect to continuous information than to give it various effects at random. This is because information given one effect is more easily understood by the user. Information once displayed to the user may be given a different and displayed again, thus appearing fresh to the user. However, the user may expect the information to have the same effect as before. Thus, what effect should be imparted to the information may be determined in accordance with the user's setting or the user's playback history.

In order to accomplish this, a plurality of "motion addition scripts" may be prepared, and the "motion addition script" the motion addition unit 14 uses may be changed to another when necessary.

The functions described above may be described in software items and performed by an appropriately designed computer.

The present embodiment can be reduced to practice as a program that enables computers to perform an operation sequence, to function as a specific means or to achieve a specific function. In addition, the embodiment can be practically used in the form of a computer-readable recording medium recording such a program.

## Claims

1. An information display apparatus,
**characterized by** comprising:
an information acquisition unit (12) configured to acquire a plurality of information items through a network in accordance with a acquisition script in a scenario, the scenario including the an acquisition script, a conversion scrip and a motion addition script;
an information conversion unit (13) configured to extract one or more parts to be displayed from each information item acquired by the information acquisition unit (12), in accordance with the conversion script included in the scenario; and
a motion addition unit (14) a motion addition unit (14) configured to process all or some of the parts extracted by the information conversion unit (13), to be displayed with changing in content automatically and/or with an audio output, respectively, in accordance with the motion addition script included in the scenario.

2. The apparatus according to claim 1, **characterized in that** the information conversion unit (13) converts a format of each of the parts to be displayed, to a format fit for the motion addition unit (14).

3. The apparatus according to claim 1, **characterized in that** the information conversion unit (13) defines an order in which to present a plurality of the parts to be displayed.

4. The apparatus according to claim 1, **characterized in that** when the part to be displayed is text data, the motion addition unit (14) adds motion and/or a synthesized voice to the text data, thereby to cause the text data to move and/or generate voice when displayed.

5. The apparatus according to claim 1, **characterized in that** the motion addition unit (14) displays the processed parts to be displayed, on a display screen.

6. The apparatus according to claim 1, **characterized in that** the scenario includes a plurality of motion addition scripts, and the motion addition unit (14) process in accordance with a selected one of motion addition scripts included in the scenario.

7. The apparatus according to claim 1, **characterized in that** the scenario includes a plurality of sub-scenarios, and the sub-scenarios are used one after another.

8. The apparatus according to claim 1, **characterized in that** a plurality of scenarios are sequentially acquired and are used one after another.

9. The apparatus according to claim 1, **characterized by** further comprising a scenario acquisition unit (10) configured to acquire the scenario through the network or from a recording medium.

10. The apparatus according to claim 1, **characterized by** further comprising a storage unit (20) configured to store both the scenario and the information items acquired in accordance with the scenario, or only the scenario.

11. The apparatus according to claim 1, **characterized in that** the acquisition script describes instructions to the information acquisition unit (12), in connection with the acquisition, the conversion script describes instructions to the information conversion unit, in connection with the extraction, and the motion addition script describes instructions to the motion addition unit (14), in connection with the processing.

12. The apparatus according to claim 1, **characterized by** further comprising display unit (15) configured to display the processed parts to be displayed, processed by the motion addition unit (14).

13. An information display method, **characterized by** comprising steps of:
acquiring a plurality of information items through a network in accordance with an acquisition script in a scenario, the scenario including the acquisition script, a conversion scrip and a motion addition script;
extracting one or more parts to be displayed from each information item acquired, in accordance with the conversion script included in the scenario; and
processing all or some of the parts extracted, to be displayed with changing in content automatically and/or with an audio output, respectively, in accordance with the motion addition script included in the scenario.
